# EUROPEAN PATENT APPLICATION

(11) **EP 3 136 264 A1**
(43) Date of publication of application: **01.03.2017**
(21) Application number: 16185051.6
(22) Date of filing: 19.08.2016
(51) Int. Cl.: G06F 17/30

(54) **SYSTEMS AND METHODS FOR ORGANIZING DATA**

(30) Priority: 26.08.2015 US 201562210385 P; 18.08.2016 US 201615240885
(71) Applicant: Exablox Corporation, Sunnyvale, CA 94086 (US)
(72) Inventor: Fitzhardinge, Jeremy, Sunnyvale, CA 94086 (US)
(74) Representative: Käck, Stefan

(57) **Abstract**

Provided are systems and methods for organizing data. An example method includes providing (502) a content-addressable object store to keep data objects representing pieces of the data. The method further includes associating (504) at least one directed graph with the data objects. Each node of the directed graph is immutable and associated with either a data object or a metadata object storing at least a list of references to data objects or further metadata objects. When the data objects are modified, a further directed graph is associated (506) with the data objects. The further directed graph is a modification to and shares nodes with the directed graph. Roots of the directed graphs are published (508) in a consensus store. The method includes managing roots associated with the directed graphs and provides access to snapshots associated with the modification of the data objects.

## Description

### TECHNICAL FIELD

This disclosure relates generally to data processing and, more particularly, to methods and systems for organizing data.

### BACKGROUND

The approaches described in this section could be pursued but are not necessarily approaches that have previously been conceived or pursued. Therefore, unless otherwise indicated, it should not be assumed that any of the approaches described in this section qualify as prior art merely by virtue of their inclusion in this section.

Computer data, such as, for example, used to represent file systems, can be constructed as objects and references pointing to these objects. The objects are located in an object store. An object may have many references pointing to it. Additionally, the object itself can hold references that point to other objects. Thus, computer data can be organized as directed graphs of data objects.

Providing backup copies of a file system can be a challenging task requiring extensive storage resources and time. In order to effectively utilize resources of various storage devices, it is important to set up an effective procedure for tracking snapshots of the file system, provide access to copies of the file system, and remove copies of the file system that are no longer needed.

### SUMMARY

The invention is defined in claims 1, 11, and 12, respectively. Particular embodiments are set out in the dependent claims.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

The technology described herein includes methods for organizing data. Some embodiments of the present disclosure can provide method for accessing different versions (snapshots) of a file system.

According to the example embodiment, a method for organizing data is disclosed. The method includes providing a content-addressable object store to keep data objects. Each of the data objects may represent a piece of the data. An address of the data object is a function of the piece of the data. The method allows associating at least one directed graph with the data objects. Each node of the directed graph is immutable and associated with one of an object from the data objects or a metadata object. The metadata object may store at least a list of references to one or more: objects from the data objects or further metadata objects. When the data objects are modified, the method includes associating at least one further directed graph with the data objects. The further directed graph is a modification to and shares at least one node with the directed graph. The method includes publishing a root of the further directed graph in a consensus store to provide access to snapshots associated with the modification of the data objects via published roots associated with the directed graph and the further directed graphs.

In some embodiments, the method further includes associating at least one root from the published roots with a timestamp. In certain embodiments, the method further includes associating at least one of the published roots with a type of a directed graph the published root is referencing to.

In certain embodiments, the directed graph includes an acyclic graph reflecting a directory structure of a file system. In some embodiments, the directed graph includes a B+tree.

In some embodiments, the method further includes associating at least one of the published roots with a snapshot identifier. In certain embodiments, the method allows providing a B+tree in the consensus store, wherein nodes of the B+tree are operable to store the published roots. The nodes in the B+tree may be indexed by the snapshot identifiers.

In some embodiments, the method further includes cloning the further directed graph by republishing the root of the further directed graph under a new name in the consensus store.

In some embodiments, the method further allows rolling back modification of the data objects to a pre-determined point by removing roots published after the pre-determined point.

According to another example embodiment of the present disclosure, the steps of the method for organizing data are stored on a machine-readable medium comprising instructions, which, when implemented by one or more processors, perform the recited steps.

### BRIEF DESCRIPTION OF THE DRAWINGS

Embodiments are illustrated by way of example, and not by limitation, in the figures of the accompanying drawings, in which like references indicate similar elements.
FIG. 1 is a block diagram showing an example collection.
FIG. 2 is a block diagram showing two collections sharing mutual objects.
FIG. 3 is a block diagram showing an example system for organizing data, according to an example embodiment.
FIG. 4 is a block diagram showing a mechanism for organizing snapshots of collections, according to an example embodiment.
FIG. 5 is a block diagram showing a method for organizing data, according to an example embodiment.
FIG. 6 shows a diagrammatic representation of a computing device for a machine in the example electronic form of a computer system, within which a set of instructions for causing the machine to perform any one or more of the methodologies discussed herein can be executed.

### DETAILED DESCRIPTION

The following detailed description includes references to the accompanying drawings, which form a part of the detailed description. The drawings show illustrations in accordance with example embodiments. These example embodiments, which are also referred to herein as "examples," are described in enough detail to enable those skilled in the art to practice the present subject matter. The embodiments can be combined, other embodiments can be utilized, or structural, logical, and electrical changes can be made without departing from the scope of what is claimed. The following detailed description is therefore not to be taken in a limiting sense, and the scope is defined by the appended claims and their equivalents. In this document, the terms "a" and "an" are used, as is common in patent documents, to include one or more than one. In this document, the term "or" is used to refer to a nonexclusive "or," such that "A or B" includes "A but not B," "B but not A," and "A and B," unless otherwise indicated.

The techniques of the embodiments disclosed herein may be implemented using a variety of technologies. For example, the methods described herein may be implemented in software executing on a computer system or in hardware utilizing either a combination of microprocessors or other specially designed application-specific integrated circuits (ASICs), programmable logic devices, or various combinations thereof. In particular, the methods described herein may be implemented by a series of computer-executable instructions residing on a storage medium such as a disk drive, or computer-readable medium. It should be noted that methods disclosed herein can be implemented by a computer (e.g., a desktop computer, tablet computer, laptop computer), game console, handheld gaming device, cellular phone, smart phone, smart television system, and so forth.

Embodiments of the present disclosure can improve data storing, processing, and visualization. In particular, embodiments of the present disclosure can facilitate organizing a file system supporting time versions or snapshots.

According to an example embodiment of the present disclosure, a method for organizing data includes providing a content-addressable object store to keep data objects. Each of the data objects may represent a piece of the data. An address of the data object is a function of the piece of the data. The method allows associating at least one directed graph with the data objects. Each node of the directed graph is immutable and associated with one of an object from the data objects or a metadata object. The metadata object may store at least a list of references to one or more: objects from the data objects or further metadata objects. When the data objects are modified, the method includes associating at least one further directed graph with the data objects. The further directed graph is a modification to and shares at least one node with the directed graph. The method includes publishing a root of the further directed graph in a consensus store to provide access to snapshots associated with the modification of the data objects via published roots associated with the directed graph and the further directed graphs.

### Collections

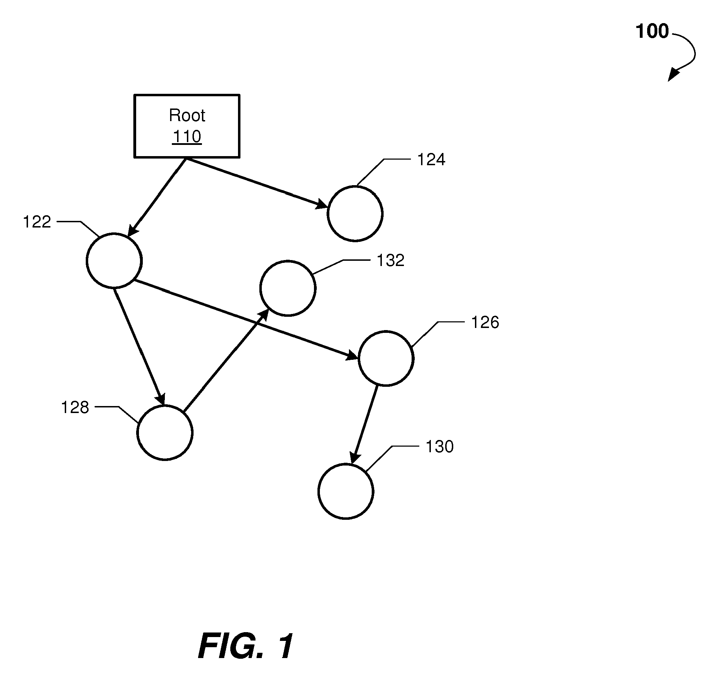

A collection is a directed graph in which each node is an immutable content-addressable object with a specific object designated as the root object (or a node). FIG. 1 shows an example directed graph (collection) 100 with one designated root 110. In the example shown in FIG. 1, the directed graph 110 includes objects 122-132.

In various embodiments, objects 122-132 are designated as either "data" or "metadata". "Data" objects include only uninterpreted bytes. "Metadata" objects have an internal structure and may refer to other objects, thus forming graph edges and allowing a directed graph to be constructed. In various embodiments, objects are content addressable. This means that the identities of objects are functions of object contents. An object cannot refer to itself either directly or transitively since addresses of the objects need to be calculated after content of the object is created. This property allows avoiding unbounded recursion when traversing nodes in a collection. The practical effect of this property is that the collection 100 cannot have cycles.

In some embodiments, identity of an object in collection 100 is a cryptographic hash (for example SHA1). Therefore, the graph 100 is also a form of a Merkle tree, in which every non-leaf node is labelled with the hash of the labels of its children nodes. This makes it conceptually similar to distributed version control systems such as git and Mercurial, archival storage systems such as Venti, file systems like Tahoe-LAFS, protocols like Bitcoin, Bittorrent, and various NoSQL databases.

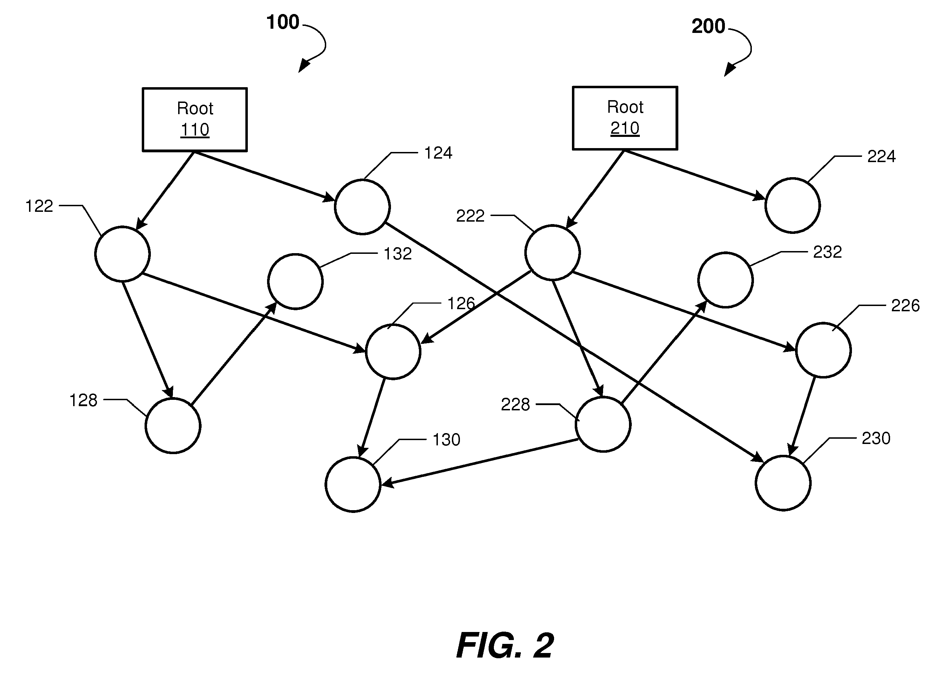

FIG. 2 is a block diagram showing two collections 100 and 200 having mutual objects. Collection 100 includes root objects 110 and collection 200 includes root object 210. The collections 200 and 100 share at least objects 126, 130, and 230. In example of FIG. 2, the collection 200 is an increment of graph 100 (shown in FIG. 2). Each of the root objects is the root of a specific unique immutable graph. In order to get the effect of modification or mutation, a new graph is constructed which includes the required changes. If the new graph is an incremental change from a previous one, then the new graph is likely to share a large number of its objects with the previous graph. The only change required by the new objects is a new root.

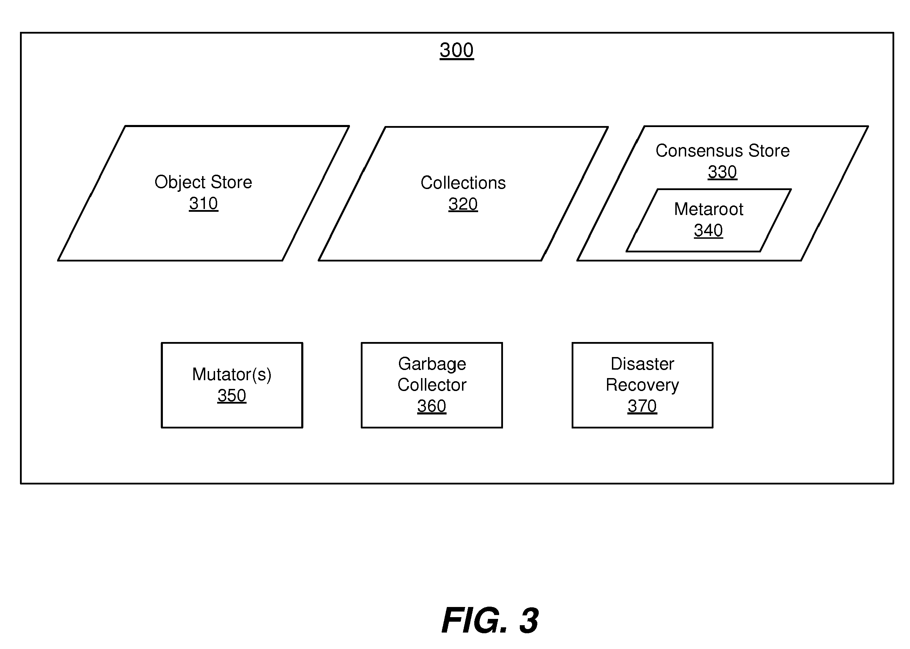

FIG. 3 is a block diagram showing an example system 300 for organizing data, according to some example embodiments. The system 300 may include an object store 310, collections 320, and a mutable consensus store 330. The mutable collection store 330 may include a metaroot 340. The system 300 may further include one or more modules, such as mutator(s) 350, a garbage collector 360, and a disaster recovery 370, which are operable to modify object store 310, collections 320, and consensus store 330.

In some embodiments, root objects are published to the mutable consensus store 330. The mutable consensus store is configured to keep the roots of collections 320. The root entries in the mutable consensus store 330 may be named, which results in "named collections". Two distinct named collections may have the same root which means they are congruent, but their names give the collections separate identities allowing the two named collection to diverge over time.

In some embodiments, collections 320 may be composed together. Any object in a graph representing a collection can be considered as a root of a sub-collection, which is an embedded subgraph of the overall collection rooted at a named root.

Every metadata object in a collection has a 32-bit magic number as its first four bytes, which identifies the internal structure of the object. This serves two purposes:
1) it allows the content to be identified by a special code (referred as "objdecode"), which can be used, for example, to enumerate all the outgoing graph edges from particular object ("child objects") or to dump debug output; and
2) ensures that every distinct format of object is unique. Without a magic number allowing distinguishing two formats of object, it is possible that two unrelated metadata objects have exactly the same serialized representation. This would result in a single object needing to be re-interpreted two or more times as different formats to find all the objects it refers to. The magic number makes sure this cannot happen, because the magic numbers are different even if nothing else is, making them two distinct objects.

### Mutators

A collection is a static data structure that does not change on its own. In some embodiments, the system 300 for organizing data can include one or more mutator(s) 350. The mutator(s) 350 is an executable code operable to manipulate (interpret, modify, read, copy, backup, etc.) collections 320, publish updated roots, and so forth. In some embodiments, the system 300 may include numerous specific mutator implementations (mutator codes) designed for different purposes. Each mutator 350 specifies at least a structure for a root metadata object, and (usually) other metadata objects which form an overall graph.

In some embodiments, each root published in the mutual consensus store 330 is also stored with its collection type, which allows the correct mutator code to be invoked.

In some embodiments, mutator(s) 350 can also perform reading operations. In certain embodiments, some mutator(s) 350 may only be allowed to perform reading operations on a collection.

### Nsmerkle

In some embodiments, a collection can be used for representation of a file system. A specific mutator referred as Nsmerkle can be operable to organize the collections in a way that structure of nodes of the collection is analogous to the structure of a traditional UNIX file system. There is an object for each identification node (inode) in the file system. Each directory is a list of names mapping to inode objects. Each inode refers to a data object which is either the (binary) data itself or the root of a tree of objects if all the data related to the inode does not fit into a single object.

The overall structure of the collection organized by Nsmerkle directly reflects the directory structure of the namespace. Like all collection graph structures, all the objects from the changed object to the root object must be updated. Therefore, making changes in a deep part of the directory namespace can result in many objects being updated.

Additionally, because every inode, small data object, and a link are distinct objects, the structure of collection constructed by Nsmerkle can result in a very large number of small objects, depending on the user's workload, which can be a practical disadvantage.

### Boab

In further embodiments, the system 300 for organizing data can include a mutator (referred as Boab) operable to organize the graph structure of a collection as a B+tree. The B+tree has the advantage of having a wide fanout and shallow depth, meaning that any path from a modification to root is short (typically fewer than 5 objects). The design of the B+tree key structure results in many related objects being placed adjacent to each other in key space, which means they can be packed together into fewer objects.

The result is that Boab collections tend to have fewer, larger objects with many smaller file system entities such as inodes, links, extended attributes, and small amounts of data packed together. The downside is an increased conceptual complexity resulting in a structure that is unlike the user-visible file system namespace, and in some cases it results in increased input/output( IO) due to more read-modify-write operations to repack updates within an otherwise unchanged object. Boab collections are described in more detail in U.S. patent application number 15/084,401, filed on March 29, 2016, entitled "B-tree based Data Model for File Systems".

### Metaroot

In some embodiments, metaroot 340 is a mechanism for making file system snapshots visible to users. In a normal mutator update, the mutator computes a new graph and publishes it to the mutual consensus store, and the old root may be discarded (see the garbage collection below).

Metaroot 340 can manage a set of sub-collections, where it maintains references to old versions of a collection by retaining references to their roots, ordered in time and indexed by a snapshot identifier (referred as a "snapid").

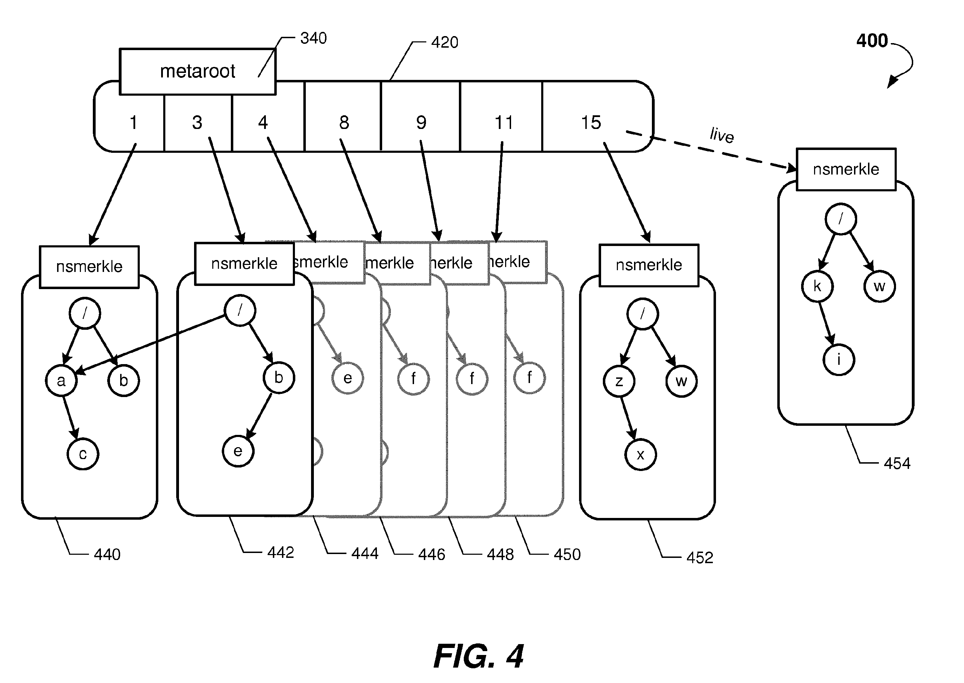

FIG. 4 is a block diagram showing system 400 for organization of snapshots of a file system, according to an example embodiment. The system 400 includes a metaroot 340. The metaroot 340 includes references 420 to roots of collections 440-454 representing snapshots of a file system. In example of FIG. 4, the collections 440-454 are in the Nsmerkle format.

In some embodiments, each metaroot 340 has a subordinate mutator which is visible to users. The subordinate mutator is typically either Boab or Nsmerkle, but the mechanism is generic to all mutators.

In some embodiments, the metaroot's structure is stored in a B+tree indexed by snapid, and for each entry it stores a timestamp and the collection type. Every time the metaroot 340 is requested to generate a new persistent graph and publish its root to the mutual consensus store 330, it calls its subordinate mutator ("live filesystem") to get and persist the root. The subordinate mutator then adds a new root as a new snapshot, generates a new B+tree representing the updated snapshots, then returns the new root for publication.

The metaroot 340 may also apply an expiration policy, so any snapshots which are due to be expired are removed as it updates the B+tree, making those roots unreferenced.

In some embodiments, each snapshot has not only an independent root but also a collection type. This allows for "in place" data format conversion, such as converting a user file system from Nsmerkle to Boab type. For example, if an old snapshot in the Nsmerkle format, the conversion of the old snapshot is performed from the Nsmerkle format to the Boab format to generate the next snapshot. The next snapshot is a semantically identical to the old snapshot of file system, except that the next snapshot in the Boab format. This allows for faster conversion (no need to convert all history), and also allows for rollback if there is a problem.

Because the metaroot is a composition of collections, it means that the sub-collections can be treated as independent collections themselves. For example, a snapshot can be extracted at any point in history and make it its own free-standing named collection, either read-only or read-write.

Conversely, a snapshot-less collection can be converted into one with snapshots by constructing a metaroot which refers to it. A metaroot can be constructed, where the snapshots are arbitrary collections with no relationship with each other.

When the snapshot is used with a file system or some other collection with a namespace (see below), which is typical, then it creates a "Snapshot" overlay on the collection's root directory. This directory is the root of a synthetic namespace which allows access to the snapshots indexed by date and time. By traversing this namespace, one arrives at the read-only root of some snapshot, which is typically a historical view of the live file system.

### Disaster Recovery

Referencing back to FIG. 3, the system 300 for organizing data can include a disaster recovery ("DR") feature 370, according to some embodiments. The DR feature 370 is based on replicating collections over a network connection, commonly a Wide Area Network (WAN), to another site. This transfer can be done entirely in terms of traversing the graph using "objdecode" (see above) to find the edges in the object graph, which means it can be generically applied to any collection structure.

The two endpoints of the transfer are referred to as the "drsource" (source) and "drtarget" (target). The transfer process is driven by the target. The target can be operable to periodically transfer a set of collections from the source as snapshots and maintain locally-visible read-only views of the last transferred snapshot.

In some embodiments, it is assumed that the target is empty and there is no existing snapshot. The target requests the root of each collection being transferred, which it then uses to enumerate the child edges and to request the content of all the objects it does not have locally. This proceeds as a tree walk until it reaches the leaf objects which have no child references. Presence of leaf objects or metadata objects with no references is required since the graph needs to be bounded in size and have no cycles.

When the target requests the root of the collection, the source creates a clone of the collection and returns the clone's root. This allows the collection to be preserved while it is being transferred, even if the original is still being modified.

Once the initial transfer is complete, it waits for some delay and then requests the current root. If the current root is the same as the previous snapshot then the transfer process knows that the collection has not changed and there is no further work.

If the current root has changed, the transfer process can fetch the new root and look at the children. The assumption is that the transfers are regular and the differences are relatively small (compared to the overall size of the graph) incremental updates. Because each metadata node is itself a root of a collection graph, the same logic that applies to the root also applies to each node: if the new snapshot refers to a root already found locally then it indicates that the entire subgraph is found locally and no further work needs to be performed.

This applies even within a transfer of a single collection. If the collection graph is not a pure tree then it will have shared nodes which are roots of shared subgraphs. After a subgraph has been transferred once, it does not need to be transferred again.

The "drtarget" subsystem is itself a mutator and maintains its own collection data structure to track the state of in-progress transfers, including all the information needed to stitch together the partial graph pieces as they arrive from the source. This structure is persistent as it allows for a transfer to be resumed quickly if it is interrupted, rather than starting from scratch. As the graph being transferred becomes more complete the "drtarget" collection gets smaller until the entire transfer is complete, whereupon the "drtarget" updates the consensus root to publish the new snapshot.

If recovery is required, the roles of the source and target can be reversed, so the last snapshot is transferred back to the original source to recover its state.

Unlike the collections mentioned above, "drtarget" is purely an object graph, and does not present any form of file system namespace.

Example methods of transferring collections over networks are described in more detail in U.S. patent application number 15/084,399, filed March 29, 2016, entitled "Structural Data Transfer over a Network".

### Collection Operations

### Namespaces

Collections may present a Posix-style hierarchical namespace which can be mounted via fuse or accessed by some other protocol. Mutators 350 such as Boab and Nsmerkle are explicitly implementing file system semantics, and, therefore, present namespaces. However, mutator "drtarget" has no namespace.

Metaroot also presents a small namespace to allow access to snapshots. Even though, in general, metaroot can be used to snapshot collections with no namespace, metaroot may not present a namespace nor in any other way access the snapshots.

### Read-only

A collection can be marked as "read-only". This simply means that the mutator code should refuse or ignore any attempt to modify the collection and never publish any updated root for it.

### Cloning

A collection may be cloned simply by republishing the same root under a new name. The result is a new named collection which is identical to the original. Either or both the original or new collection may be read-write or read-only. If a read-only clone of a collection is made, it provides a form of explicit, manual snapshotting rather than the automatic creation and expiry implemented by the metaroot 340.

A read-write clone creates a fork in the history of the collection graph. If the original is also read-write, then the original and new collection can both diverge over time from a common starting point, while still sharing all the parts of the graph which are still common between them.

### Validation / Attestation

Because the root object identifier is unique for a specific graph configuration, it can be used to attest to a specific state of the file system. If the root SHA1 hash is digitally signed and timestamped, it can be used as a proof that a specific file system state existed at that time. This may be useful for forensic or compliance use cases.

### Snapshot Extraction

As mentioned above in regards to "metaroot", a specific snapshot can be extracted from the metaroot 340 and cloned into a new top-level named collection. This is a special case of cloning. The extracted snapshot can either be read-only or read-write. If the extracted snapshot is read-write, it effectively allows the file system (typically) in question to be rewound to some past state and then modified from that past state.

### Snapshot Rollback

A related operation, a collection with snapshots can be rolled back entirely to some past point, removing all the snapshots after that point. This operation could be used to recover from some large-scale problem, such as accidental mass deletion, failed software update or cryptolocker malware.

### Adding Periodic Snapshots

Likewise, a collection without metaroot snapshots can be given snapshots in place. One can construct a new metaroot with a single initial snapshot whose root is the target collection. Once constructed, that metaroot's root and type can replace the original collection. Operationally, this means the collection gains periodic snapshots from that point on.

### Garbage Collection

When a collection root is updated in the mutual consensus store, the previous root is no longer referred to. Any objects which are not transitively reachable from a published consensus root are no longer accessible, and are just uselessly taking up space.

To reclaim this space, the system 300 may implement (broadly) a mark and sweep garbage collector 350. The marking phase can be driven by taking the current graph roots of all existing collections and traverses all the objects reachable from those roots to mark them live. Any object not marked is considered garbage and may be reclaimed.

The marker itself is a simple graph walker, and it uses the same "objdecode" infrastructure used by "drtarget" to find all the outgoing edges from a given graph node.

While there are many subtle interactions with modification, the marker does take advantage of the fact that once it chooses a specific collection root to mark from, it can rely on it being an immutable graph so it is never racing with the mutator changing the graph.

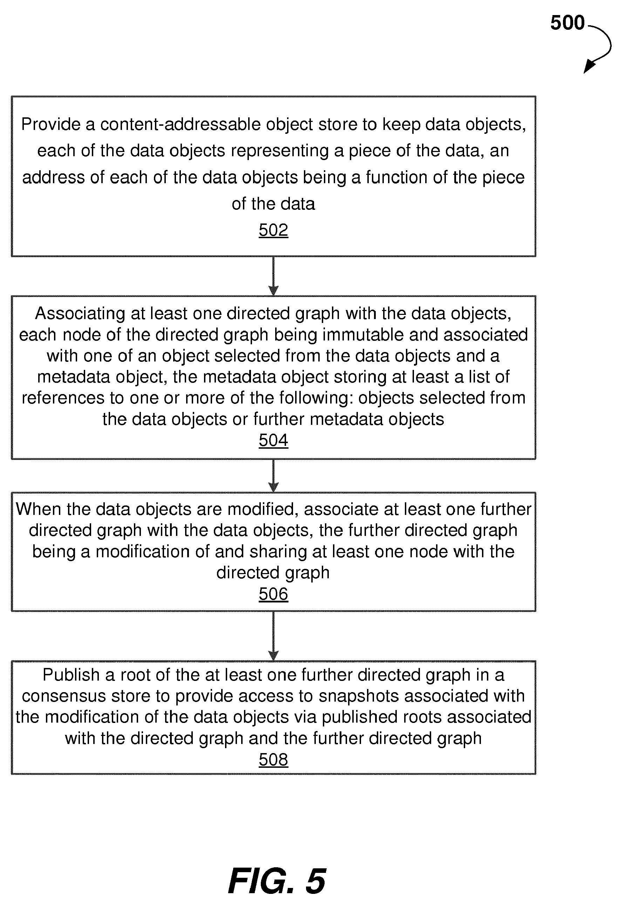

FIG. 5 is a flowchart showing a method 500 for organizing data, according to an example embodiment. The method 500 can be implemented within a computing device. The method 500 may commence with providing a content-addressable object store to keep data objects in block 502. The data objects may represent a piece of the data. An address the data object is calculated based on content of the piece of the data.

In block 504, the method 500 may include associating at least one directed graph with the data objects. Each node of the directed graph is immutable and associated with one of an object from the data objects or a metadata object. The metadata object may store at least a list of references to one or more: objects from the data objects or further metadata objects.

When the data objects are modified the method 500 may include associating at least one further directed graph with the data objects in block 506. The further directed graph is a modification to and shares at least one node with the directed graph associated with the data object prior to modification.

In block 508, the method 500 includes publishing a root of the further directed graph in a consensus store to provide access to snapshots associated with the modification of the data objects via published roots associated with the directed graph and the further directed graphs.

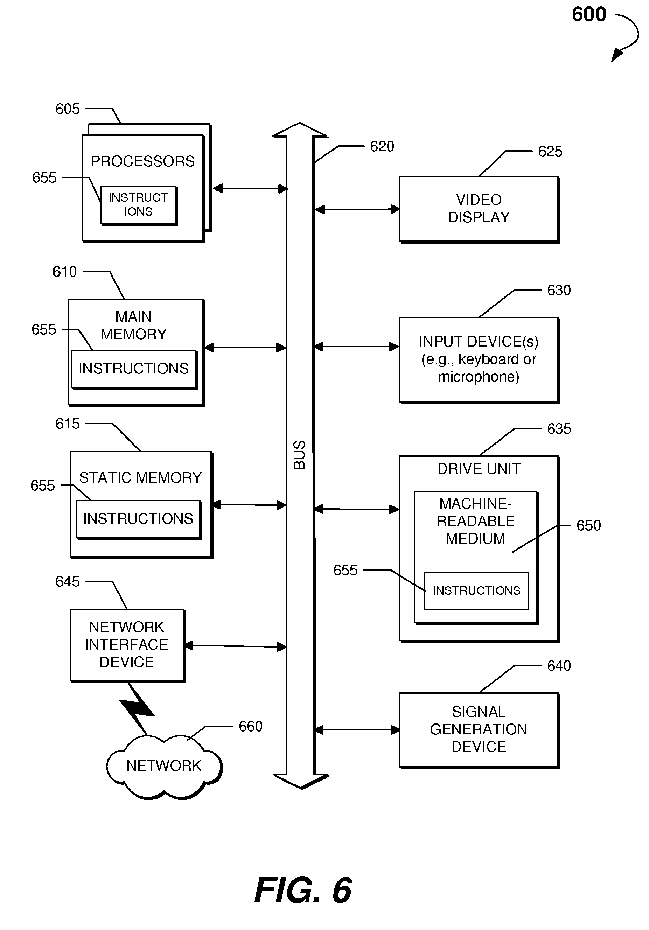

FIG. 6 shows a diagrammatic representation of a computing device for a machine in the example electronic form of a computer system 600, within which a set of instructions for causing the machine to perform any one or more of the methodologies discussed herein can be executed. In various example embodiments, the machine operates as a standalone device or can be connected (e.g., networked) to other machines. In a networked deployment, the machine can operate in the capacity of a server or a client machine in a server-client network environment, or as a peer machine in a peer-to-peer (or distributed) network environment. The machine can be a personal computer (PC), a tablet PC, a set-top box (STB), a personal digital assistant, a cellular telephone, a portable music player (e.g., a portable hard drive audio device, such as an Moving Picture Experts Group Audio Layer 3 (MP3) player), gaming pad, portable gaming console, in-vehicle computer, smart-home computer, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor or multiple processors 605 (e.g., a central processing unit (CPU), a graphics processing unit (GPU), or both), and a main memory 610 and a static memory 615, which communicate with each other via a bus 620. The computer system 600 can further include a video display unit 625 (e.g., a liquid crystal display). The computer system 600 can also include at least one input device 630, such as an alphanumeric input device (e.g., a keyboard), a cursor control device (e.g., a mouse), a microphone, a digital camera, a video camera, and so forth. The computer system 600 also includes a disk drive unit 635, a signal generation device 640 (e.g., a speaker), and a network interface device 645.

The disk drive unit 435 includes a computer-readable medium 650, which stores one or more sets of instructions and data structures (e.g., instructions 655) embodying or utilized by any one or more of the methodologies or functions described herein. The instructions 655 can also reside, completely or at least partially, within the main memory 610 and/or within the processors 605 during execution thereof by the computer system 600. The main memory 610 and the processors 605 also constitute machine-readable media.

The instructions 655 can further be transmitted or received over a network 460 via the network interface device 645 utilizing any one of a number of well-known transfer protocols (e.g., Hyper Text Transfer Protocol (HTTP), CAN, Serial, and Modbus). For example, the network 660 may include one or more of the following: the Internet, local intranet, PAN (Personal Area Network), LAN (Local Area Network), WAN (Wide Area Network), MAN (Metropolitan Area Network), virtual private network (VPN), storage area network (SAN), frame relay connection, Advanced Intelligent Network (AIN) connection, synchronous optical network (SONET) connection, digital T1, T3, E1 or E3 line, Digital Data Service (DDS) connection, DSL (Digital Subscriber Line) connection, Ethernet connection, ISDN (Integrated Services Digital Network) line, cable modem, ATM (Asynchronous Transfer Mode) connection, or an FDDI (Fiber Distributed Data Interface) or CDDI (Copper Distributed Data Interface) connection. Furthermore, communications may also include links to any of a variety of wireless networks including, GPRS (General Packet Radio Service), GSM (Global System for Mobile Communication), CDMA (Code Division Multiple Access) or TDMA (Time Division Multiple Access), cellular phone networks, GPS, CDPD (cellular digital packet data), RIM (Research in Motion, Limited) duplex paging network, Bluetooth radio, or an IEEE 802.11-based radio frequency network.

While the computer-readable medium 650 is shown in an example embodiment to be a single medium, the term "computer-readable medium" should be taken to include a single medium or multiple media (e.g., a centralized or distributed database, and/or associated caches and servers) that store the one or more sets of instructions. The term "computer-readable medium" shall also be taken to include any medium that is capable of storing, encoding, or carrying a set of instructions for execution by the machine and that causes the machine to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media. Such media can also include, without limitation, hard disks, floppy disks, flash memory cards, digital video disks (DVDs), random access memory (RAM), read only memory (ROM), and the like.

The example embodiments described herein can be implemented in an operating environment comprising computer-executable instructions (e.g., software) installed on a computer, in hardware, or in a combination of software and hardware. The computer-executable instructions can be written in a computer programming language or can be embodied in firmware logic. If written in a programming language conforming to a recognized standard, such instructions can be executed on a variety of hardware platforms and for interfaces to a variety of operating systems. Although not limited thereto, computer software programs for implementing the present method can be written in any number of suitable programming languages such as, for example, Hypertext Markup Language (HTML), Dynamic HTML, Extensible Markup Language (XML), Extensible Stylesheet Language (XSL), Document Style Semantics and Specification Language (DSSSL), Cascading Style Sheets (CSS), Synchronized Multimedia Integration Language (SMIL), Wireless Markup Language (WML), Java^{™}, Jini^{™}, C, C++, Perl, UNIX Shell, Visual Basic or Visual Basic Script, Virtual Reality Markup Language (VRML), ColdFusionTM or other compilers, assemblers, interpreters or other computer languages or platforms.

Thus, a technique for organizing data is disclosed. Although embodiments have been described with reference to specific example embodiments, it will be evident that various modifications and changes can be made to these example embodiments without departing from the scope of the present application. Accordingly, the specification and drawings are to be regarded in an illustrative rather than a restrictive sense.

## Claims

1. A computer-implemented method for organizing data, the method comprising:
providing (502) a content-addressable object store to keep data objects, each of the data objects representing a piece of the data, an address of each of the data objects being a function of the piece of the data;
associating (504) at least one directed graph (100) with the data objects, each node of the directed graph (100) being immutable and associated with one of an object (122-132) from the data objects and a metadata object, the metadata object storing at least a list of references to one or more: objects from the data objects or further metadata objects; and
when the data objects are modified:
associating (506) at least one further directed graph (200) with the data objects, the at least one further directed graph (200) being a modification to and sharing at least one node (126, 130, 230) with the at least one directed graph (100); and
publishing (508) a root (210) of the at least one further directed graph (200) in a consensus store to provide access to snapshots associated with the modification of the data objects via published roots (110, 210) associated with the at least one directed graph (100) and the at least one further directed graph (200).

2. The method of claim 1, further comprising associating at least one root from the published roots (110, 210) with a timestamp.

3. The method of claim 1 or 2, further comprising associating at least one of the published roots (110, 210) with a type of a directed graph the at least one root is referencing to.

4. The method of claim 1, 2 or 3, wherein the directed graph (100) includes an acyclic graph reflecting a directory structure of a file system.

5. The method of claim 1, 2 or 3, wherein the directed graph (100) includes a B+tree.

6. The method of any of the preceding claims, further comprising associating at least one of the published roots (110, 210) with a snapshot identifier.

7. The method of claim 6, further comprising providing a B+tree in the consensus store, wherein nodes of the B+tree are operable to store the published roots (110, 210).

8. The method of claim 7, further comprising indexing the nodes in the B+tree by the snapshot identifiers.

9. The method of any of the preceding claims, further comprising cloning the at least one further directed graph (200) by republishing the root (210) of the at least one further directed graph (200) under a new name in the consensus store.

10. The method of any of the preceding claims, further comprising rolling back modification of the data objects to a pre-determined point by removing roots published after the pre-determined point.

11. A system for organizing data, the system comprising:
at least one processor (605); and
a memory (610, 615, 650) communicatively coupled to the at least one processor (605), the memory (610, 615, 650) storing instructions (655), which, when executed by the at least one processor (605), perform a method according to any of claims 1-10.

12. A non-transitory computer-readable storage medium having embodied thereon instructions (655), which, when executed by one or more processors (605), perform a method for organizing data according to any of claims 1-10.
